# EUROPEAN PATENT APPLICATION

(11) **EP 1 615 138 A2**
(43) Date of publication of application: **11.01.2006**
(21) Application number: 05253224.9
(22) Date of filing: 25.05.2005
(51) Int. Cl.: G06F 15/173, H04L 12/42

(54) **Multiprocessor chip having bidirectional ring interconnect**

(30) Priority: 28.05.2004 US 855509
(71) Applicant: INTEL CORPORATION, Santa Clara, CA 95052 (US)
(72) Inventor: Chrysos, George, Chandler, AZ 85226 (US); Mattina, Matthew, Worcester, MA 01604 (US); Felix, Stephen, Bristol BS10 5JA (GB)
(74) Representative: Harrison Goddard Foote

(57) **Abstract**

Embodiments of the present invention are related in general to on-chip integration of multiple components on a single die and in particular to on-chip integration of multiple processors via a bidirectional ring interconnect. An embodiment of a semiconductor chip includes a plurality of processors, an address space shared between the processors, and a bidirectional ring interconnect to couple the processors and the address space. An embodiment of a method includes calculating distances between a packet source and destination on multiple ring interconnects, determining on which interconnect to transport the packet, and then transporting the packet on the determined interconnect. Embodiments provide improved latency and bandwidth in a multiprocessor chip. Exemplary applications include chip multiprocessing.

## Description

### FIELD OF THE INVENTION

Embodiments of the present invention are related in general to on-chip integration of multiple components on a single die and in particular to on-chip integration of multiple processors.

### BACKGROUND

Trends in semiconductor manufacturing show the inclusion of more and more functionality on a single silicon die to provide better processing. To achieve this, multiple processors have been integrated onto a single chip.

Barroso describes an on-chip integration of multiple central processing units (CPUs) sharing a large cache, in his paper entitled "Piranha: A Scalable Architecture Based on Single-Chip Multiprocessing," *Proc. 27*^{*th*} *Annual Int. Symp. Computer Architecture,* Jun. 2000. Barroso shows that the large cache shared among the CPUs in a chip multiprocessor is beneficial for the performance of shared-memory database workloads. See also Barroso, "Impact of Chip-Level Integration on Performance of OLTP Workloads," *6*^{*th*} *Int. Symp. High-Performance Computer Architecture*, Jan. 2000. Barroso also shows that read-dirty cache operations (data written by one CPU and read by a different CPU) dominate the performance of these workloads running on single-CPU-chip based systems (e.g., the Marvel-Alpha system). Barroso further shows that, when communication latency of such cache operations is shortened, putting multiple CPUs and a large shared cache on a single die increases performance substantially. In Barroso, the processors and cache are connected by a set of global buses and a crossbar switch.

However, a concern with crossbar switches and buses is that, because many and potentially distant requestors may arbitrate for a global resource, expensive arbitration logic is needed. This results in long latency and potentially a large die area and power consumption.

Another concern with the integration of multiple processors on a single chip is the increased numbers of transistors and wires on the chip. While transistor speeds increase as drawn gate lengths decrease, wire speeds do not increase proportionately. Long wires are typically not scaled in proportion to transistor gate speeds. As a result, wire delay and clock skew become dominant factors in achieving high clock rates in .10 micron technologies and below.

A common solution has been to divide the global clock into local clocks, called patches, synchronizing one or more adjacent devices. However, this becomes a concern because more clock skew is introduced for signals that traverse clock patches, such that the increased clock skew must be synchronized to the destination clock patch. Accordingly, more pressure is put on the cycle time to shorten the distance traveled between clock patches and hence the likelihood of significant clock skew. Connection technologies, such as the crossbar switches or buses, that span large distances on the chip can exacerbate the wire delay and clock skew.

Latency and bandwidth of communication between CPUs and a shared cache on a chip significantly impact performance. It is preferable that the latency from the CPUs to the shared cache be low and the bandwidth from the shared cache (or other CPUs) to the CPUs be high. However, some connection technology has been a constraint against improved latency and bandwidth. When multiple CPUs execute programs or threads, they place a high demand on the underlying connection technology. Therefore, it becomes important to attenuate wire delay and clock skew in multiple processor configurations.

As described in "Architecture Guide: C-5e/C-3e Network Processor, Silicon Revision B0," Motorola, Inc., 2003, Motorola has implemented a chip multiprocessor that includes multiple processors connected on a single chip by a unidirectional ring to reduce distances on the ring that packets travel between the components. Communication between the multiple processors and other components circulates the ring in one direction.

However, the problem with the unidirectional ring is that the latency and bandwidth are still constrained by connection technology. To communicate with an upstream processor, packets must traverse the entire ring before arriving at the upstream processor.

Therefore, there is a need in the art for a connection technology for on-chip integration that provides efficient, fast system performance.

### SUMMARY OF INVENTION

According to a first aspect of this invention there is provided an apparatus as claimed in claim 1 herein.

According to a second aspect of this invention there is provided an semiconductor chip as claimed in claim 8 herein.

According to a third aspect of this invention there is provided a system as claimed in claim 29 herein.

According to a fourth aspect of this invention there is provided a method as claimed in claim 35 herein.

Preferred features of this invention are defined by the dependent claims.

### BRIEF DESCRIPTION OF DRAWINGS

FIG. 1 is a semiconductor chip including multiple nodes coupled to a single bidirectional ring interconnect, in accordance with an embodiment of the present invention.
FIG. 2 is a semiconductor chip including multiple nodes coupled to multiple unidirectional and/or bidirectional ring interconnects, in accordance with an embodiment of the present invention.
FIG. 3 is a multiprocessor system including a multiprocessor chip with multiple components coupled to a single bidirectional ring interconnect, in accordance with an embodiment of the present invention.
FIG. 4 is a flowchart of a method according to an embodiment of the present invention.
FIG. 5 is a block diagram of a computer system for implementing an embodiment of the present invention.

### DETAILED DESCRIPTION

Embodiments of the present invention may provide a semiconductor chip including processors, an address space shared between the processors, and a bidirectional ring interconnect to couple together the processors and the shared address space. In accordance with one embodiment of the present invention, the processors may include CPUs and the address space may include a large shared cache.

Embodiments of the present invention may also provide a method for selecting the direction on the bidirectional ring interconnect to transport packets between the processors and the shared address space. The method may include calculating the distance between a packet's source and destination in a clockwise direction and the distance in a counterclockwise direction, determining in which direction to transport the packet based on the calculated distances, and transporting the packet on the ring corresponding with and in the determined direction.

Embodiments of the present invention advantageously provide reduced latency and increased bandwidth for an on-chip integration of multiple processors. This may be particularly beneficial in parallel shared-memory applications, such as transaction processing, data mining, managed run-time environments such as Java or .net, and web or email serving.

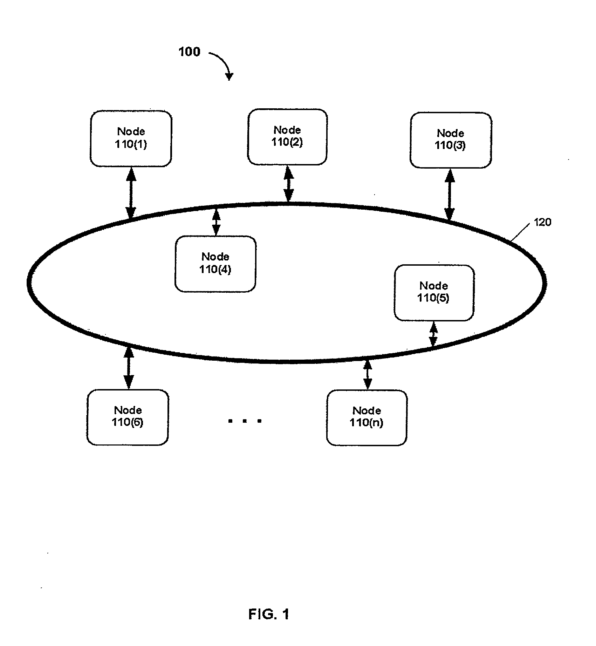

FIG. 1 is a semiconductor chip including multiple nodes coupled to a bidirectional ring interconnect, in accordance with an embodiment to the present invention. Nodes 110(1) through 110(n) may be connected to bidirectional ring interconnect 120 at various access points or stops. Packets may travel between nodes 110(1) through 110(n) on interconnect 120 in either a clockwise or counterclockwise direction.

Nodes 110(1) through 110(n) may include a processor, cache bank, memory interface, global coherence engine interface, input/output interface, and any other such packet-handling component found on a semiconductor chip.

In FIG. 1, in an embodiment of the present invention, nodes 110(1) through 110(n) may be implemented as cache bank nodes by logically dividing a single large shared cache into subsets. Each cache bank node may include a portion of the address space in the single cache, and may independently service block requests (read, write, invalidate, etc) for the portion of the address space in the single cache. On interconnect 120, each cache bank node may have its own access point or stop.

In FIG. 1, interconnect 120 may include multiple unidirectional wires (not shown), where a first set of the unidirectional wires may transport packets in a clockwise direction and a second set may transport packets in a counterclockwise direction. Each set of unidirectional wires may have either a specific purpose (e.g., sending address commands) or a general purpose (e.g., supporting multiple packet types (address request, data, cache coherence protocol message, etc.)). Alternatively, each set of unidirectional wires may be designated to transport a single packet type.

Alternatively, in FIG. 1, interconnect 120 may include multiple bidirectional wires capable of transporting packets in both directions. In this alternate embodiment, the semiconductor chip may include switching logic to switch each wire to a desired direction to transport packets during a particular transaction.

Interconnect 120 may transport packets at various rates. For example, interconnect 120 may transport packets at a rate of one or more nodes per clock cycle or one node every two or more clock cycles. Many factors may determine the transport rate including the amount of traffic, the clock rate, the distance between nodes, etc. Generally, a node waits to inject a packet onto interconnect 120 until any packet already on interconnect 120 and at the node passes the node.

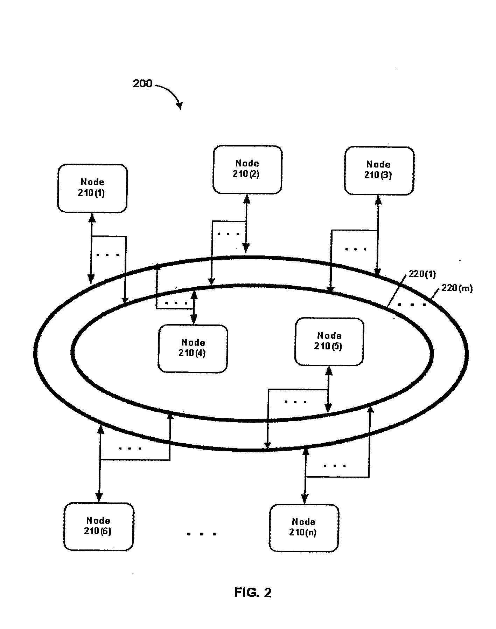

FIG. 2 is a semiconductor chip including multiple nodes coupled to multiple ring interconnects, in accordance with an embodiment of the present invention. Nodes 210(1) through 210(n) may be connected to ring interconnects 220(1) through 220(m) at various access points or stops. Each node may select any of ring interconnects 220(1) through 220(m) on which to transport packets to another node.

In one embodiment, all the interconnects in FIG. 2 may be unidirectional, where some interconnects transport packets in only a clockwise direction and other interconnects transport packets in only a counterclockwise direction.

In an alternate embodiment, some interconnects in FIG. 2 may be unidirectional and others bidirectional. In this alternate embodiment, some of the unidirectional interconnects may transport packets in only a clockwise direction and others may transport packets in only a counterclockwise direction. The bidirectional interconnects may transport packets in both directions, consistent with the operation of the bidirectional interconnect of FIG. 1.

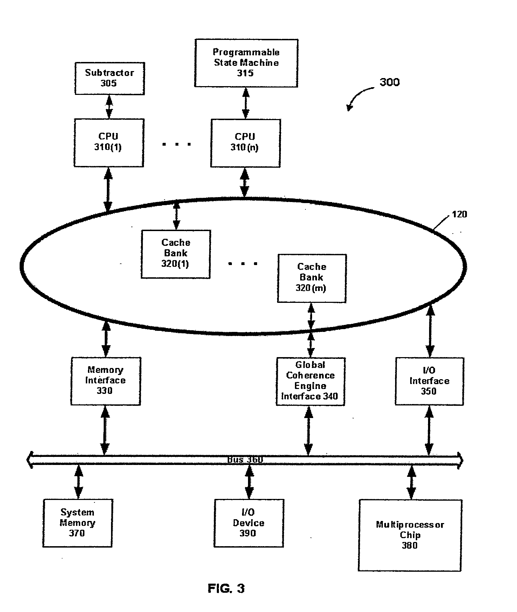

FIG. 3 is a multiprocessor system including a multiprocessor chip coupled to a single bidirectional ring interconnect, in accordance with an embodiment of the present invention. In FIG. 3, multiprocessor chip 300 may include CPUs 310(1) through 310(n), cache banks 320(1) through 320(m), memory interface 330, global coherence engine interface 340, and input/output ("I/O") interface 350, all coupled to bidirectional ring interconnect 120. Each component coupled to bidirectional ring interconnect 120 may have a node number to identify its location on the interconnect.

In FIG. 3, CPU 310(1) may include subtractor 305, which may be implemented as a hardware device, to compute the distance between CPU 310(1) and any other node on bidirectional ring interconnect 120. Subtractor 305 may compute the distance between CPU 310(1) and a destination node by subtracting the node number of the destination node from the node number of CPU 310(1). Subtractor 305 may compute the distance in both clockwise and counterclockwise directions. CPU 310(1) may use the computed distances to select in which direction to transport packets. Generally, although the direction having the shortest distance may be selected to transport the packets, it is not the only solution. Additional direction selection methods are contemplated and will be described below.

In FIG. 3, CPU 310(n) may include programmable finite state machine 315, a hardware device, which may be programmed to compute the distance between CPU 310(n) and any other node in bidirectional ring interconnect 120 using a similar operation as subtractor 305, for example. In one embodiment, programmable finite state machine 315 may be programmed to search a look-up table for the direction in which to transport packets on bidirectional ring interconnect 120. For example, the look-up table may be initialized to include two entries-clockwise and counterclockwise. Upon computing the distance between CPU 310(n) and the destination node in the clockwise and counterclockwise directions, programmable finite state machine 315 may retrieve one of the look-up table entries based on the computed distances.

In an alternate embodiment, in FIG. 3, CPUs 310(1) through 310(n) may each compute the distance between themselves and the destination nodes using software. Each CPU 310(1) through 310(n) may determine in which direction to transport packets on bidirectional ring interconnect 120 based on the computed distances.

In accordance with an embodiment of the present invention, the direction in which packets are transported may be selected as the direction providing the shortest distance between a packet's source and destination, the direction providing less traffic, or any other desired criteria for a particular transaction.

In FIG. 3, it is to be understood that each of CPUs 310(1) through 310(n) is not limited to the components and configurations shown in FIG. 3. Therefore, embodiments of the present invention may use a subtractor, a programmable finite state machine, a processor, any other such component, or any combination thereof to perform the computations described herein. Subtractor 305 and programmable finite state machine 315 may also be coupled to any of cache banks 320(1) through 320(m) or any other node on bidirectional ring interconnect 120. Subtractor 305 and programmable finite state machine 315 may also be coupled to bidirectional ring interconnect 120 to be shared by one or more nodes on bidirectional ring interconnect 120.

In FIG. 3, cache banks 320(1) through 320(m) may be subsets of a single large shared cache as described previously. Each cache bank may service particular portions of the address space in the single cache.

Memory interface 330, in FIG. 3, may be coupled to bidirectional ring interconnect 120 and bus 360 to provide an interface between system memory 370 and the nodes (i.e., CPUs 310(1) through 310(n) and cache banks 320(1) through 320(m)) on multiprocessor chip 300. Memory interface 330 may be shared between all nodes on multiprocessor chip 300 to transport packets between system memory 370 and the nodes.

Likewise, global coherence engine interface 340 may be coupled to bidirectional ring interconnect 120 and bus 360 to provide an interface between multiprocessor chip 300 and one or more other multiprocessor chips 380. Global coherence engine interface 340 may be shared by all nodes on multiprocessor chip 300 to transport packets between the nodes on multiprocessor chip 300 and one or more other multiprocessor chips 380.

In FIG. 3, I/O interface 350 may be coupled to bidirectional ring interconnect 120 and bus 360 to provide an interface between I/O device 390 and the nodes on multiprocessor chip 300. I/O interface 350 may be shared by all nodes on multiprocessor chip 300 to transport packets between the nodes on multiprocessor chip 300 and I/O device 390.

It is to be understood that the multiprocessor system is not limited to the components of FIG. 3, but may include any components capable of packet handling.

An example of a communication in an embodiment according to the present invention may include a processor requesting a cache block in a cache bank, for example, CPU 310(1) requesting a cache block from cache bank 320(m). CPU 310(1) may compute the distance to cache bank 320(m) in both clockwise and counterclockwise directions. CPU 310(1) may select a direction in which to send its request, based on the computed distances, and CPU 310(1) may deposit an address through its access port or stop into a ring slot on bidirectional ring interconnect 120. The address may advance around bidirectional ring interconnect 120 until it arrives at the access port or stop of cache bank 320(m), which contains the relevant data for the requested address.

Cache bank 320(m) may retrieve the address from the ring slot on bidirectional ring interconnect 120 and use the address to retrieve the data stored therein. Cache bank 320(m) may deposit the data through its access port or stop into a next available ring slot on bidirectional ring interconnect 120. The data may traverse bidirectional ring interconnect 120 in the same or opposite direction from the direction in which the address arrived, until the data arrives back at originating CPU 310(1). CPU 310(1) may consume the data.

In this example, multiple requests may transverse bidirectional ring interconnect 120 concurrently. The advantage of bidirectional ring interconnect 120 is that the requests may pass the same node at the same time, but in opposite directions, since embodiments of bidirectional ring interconnect 120 provide bidirectional transport.

Another advantage of bidirectional ring interconnect 120 in FIG. 3 is that multiple requests may arrive at cache banks 320(1) and 320(m) concurrently, even though the cache banks physically belong to a single shared cache. As a result, a request arriving at cache bank 320(1) may be serviced concurrently with another request arriving at cache bank 320(m) during the same clock cycle. Address bits in the requests may be used to determine to which cache bank each request pertains. There may be many mappings of address bits to cache banks. In one embodiment, consecutive block addresses may pertain to different cache banks on bidirectional ring interconnect 120. The address bits may be hashed or selected in such a way as to provide reasonably uniform access to all banks under uncontrived workloads.

Although not shown in FIG. 3, in accordance with an embodiment of the present invention, multiple ring interconnects 220(1) through 220(m) may be used as in FIG. 2. In this embodiment, CPU 310(1) may send multiple requests on multiple interconnects 220(1) through 220(m), thereby receiving back at least twice as much data to consume in a given time period.

In accordance with an embodiment of the present invention, in FIG. 3, additional addressing components, such as socket network routers, memory controllers, and directory caches, may also be coupled to bidirectional ring interconnect 120. The addressing may be similarly interleaved for these components.

Embodiments of the present invention may use any well-known cache coherence protocol for communication and maintaining memory consistency. Many protocols may be layered upon a bidirectional ring interconnect. Each protocol may have a unique set of resource contention, starvation or deadlock issues to resolve. These issues may be resolved using credit-debit systems and buffering, pre-allocation of resources (such as reserved cycles on the ring interconnects or reserved buffers in resource queues), starvation detectors, prioritization of request/response messages, virtualization of the interconnect, etc.

Another advantage of embodiments of the present invention is that the bidirectional ring interconnects typically halve the average ring latency and quadruple the average peak bandwidth of uniform communication on the system when compared to single unidirectional ring interconnects. The performance improvement may be even greater when compared to non-ring systems. Uniform communication may be random or periodic access patterns that tend to equally utilize all the cache banks.

In general, the average ring latency may be defined as the average number of cycles consumed on the interconnect for uniform communication, including the time on the ring interconnect for the request and the data return, excluding the resident time of the request and data in any component (i.e., node). Similarly, the average peak bandwidth may be defined as the average number of data blocks arriving at their destinations per clock cycle for uniform communication.

For example, the average ring latency for a processor requesting a cache block in a single unidirectional ring interconnect may be defined as the time that the processor's request is in transport from the processor to the appropriate cache bank and the time that the data block is returning from the cache bank back to the processor. Therefore, assuming a packet transport rate of one node per clock cycle, the average ring latency time for the single unidirectional ring interconnect will be N cycles, which is the same as the number of nodes in the system. This is because the request traverses some of the nodes to get to the appropriate cache bank, and the data must traverse the rest of the nodes in the system to get back to the originating processor. Basically, since the ring interconnect is a loop, all the nodes must be traversed to complete a request from a processor back to itself.

The average ring latency for a processor requesting a cache block in a bidirectional ring interconnect may also be defined as the time that the processor's request is in transport from the processor to the appropriate cache bank and the time that the data block is returning from the cache bank back to the processor. However, assuming, for example, a packet transport rate of one node per clock cycle, the average ring latency time will be half that of the unidirectional ring interconnect. This is because, in one embodiment, the direction on the bidirectional ring is selected that has the least number of intervening nodes to traverse between the processor and the cache bank. Therefore, at most, the request may traverse N/2 nodes, and the data return may traverse N/2 nodes, resulting in a worst case latency of N cycles. However, if the accesses are uniform, the expected average value of the cache bank distance from the requesting processor will be half of the worst case, or N/4 nodes traversed. Since the trip back will also take the shortest path, another N/4 nodes may be traversed before the processor receives the data. This gives an average latency of N/2 cycles for the bidirectional ring interconnect, reducing the latency and interconnect utilization for a single request by approximately 50%.

The reduction in interconnect utilization with the bidirectional ring interconnect may also result in much higher average bandwidth over the single unidirectional ring interconnect. Each cache request may deliver one data block and consume some number of the nodes on the ring. If one request consumes all N nodes on the ring, as in the single unidirectional ring interconnect, the most bandwidth the unidirectional interconnect can deliver is 1 data block every cycle. In general, the bidirectional ring interconnect may consume less than all nodes in the ring for an average uniform request. As stated above, the bidirectional ring interconnect may actually consume N/2 nodes on average. Also, the bidirectional ring interconnect may have twice as much capacity as the single unidirectional ring interconnect, thus, permitting the bidirectional ring interconnect to carry up to 2 data blocks per node. In total, out of 2N latches on the combined ring interconnects, N/2 may be consumed for an average request and data block return for a total of 2N/(N/2) = 4 concurrent data blocks per cycle, a factor of 4 greater than the single unidirectional ring interconnect. The average peak bandwidth may be independent of the number of nodes.

In accordance with an embodiment of the present invention, a bidirectional ring interconnect may comprise two disjoint address and data sets of wires. As a result, the bandwidth may increase by another factor of two, because the requests do not consume data bandwidth resources, only the responses. In this way, the data wires' occupancy may only be 1/4 of the ring stops for a double bidirectional ring interconnect. Both interconnects may thus get another doubling benefit from splitting a general-purpose ring interconnect into an address and data ring.

For example, for a 16-node bidirectional ring that splits the sets of wires between data and address requests, the average peak bandwidth may be four simultaneous data transfer operations per data ring x 2 rings x 64 Byte Data Width x 3 GHz, which equals 1.5 TByte/second.

As such, the bidirectional ring interconnect may provide four times the bandwidth of a single unidirectional ring interconnect, including two times from doubling the wires, and two times from halving the occupancy of transactions using shortest-path routing. However, if the bidirectional ring interconnect's wires are all unified for both data and address requests, the bandwidth may be only two times that of the single unidirectional ring interconnect.

The above example is for explanation purpose only as other factors may impact the latency and bandwidth on bidirectional ring interconnects, such as actual occupancies and loss of bandwidth due to virtualization or anti-starvation mechanisms.

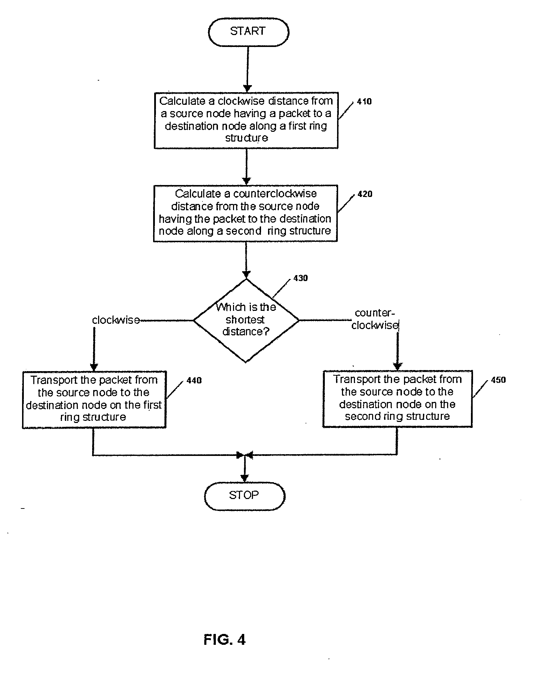

FIG. 4 is a flowchart of a method according to an embodiment of the present invention. In FIG. 4, the method may determine in which direction to transport packets on a bidirectional ring interconnect. In one embodiment, a single bidirectional ring interconnect may include a first set of wires to transport packets in a clockwise direction (which may comprise a first ring structure) and a second set of wires to transport packets in a counterclockwise direction (which may comprise a second ring structure).

In FIG. 4, a source node sending a packet to a destination node may calculate (410) the distance on the first ring structure to the destination node. The source node may also calculate (420) the distance on the second ring structure to the destination node. The source node may determine (430) which is the shortest distance. If the shortest distance is determined (430) to be in the clockwise direction, the source node may transport (440) the packet on the first ring structure. Alternatively, if the shortest distance is determined (430) to be in the counterclockwise direction, the source node may transport (450) the packet on the second ring structure.

If the determined ring structure is already transporting a packet that arrives at the source node during this clock cycle, the source node may wait until the packet on the ring passes the source node before injecting the packet onto the determined ring structure. Once on the determined ring structure, the packet may advance every clock cycle until it reaches the destination node.

In accordance with another embodiment of the present invention, the source node may determine which ring structure has less traffic and may transport the packet on the ring structure with the least traffic.

In an alternate embodiment, the bidirectional ring interconnect may comprise two unidirectional ring interconnects that transport packets in opposite directions. In this embodiment, the unidirectional ring interconnect to transport in the clockwise direction may comprise the first ring structure and the unidirectional ring interconnect to transport in the counterclockwise direction may comprise the second ring structure.

In other alternate embodiments, the bidirectional ring interconnect may comprise one unidirectional ring interconnect and a bidirectional ring interconnect or two bidirectional ring interconnects. Similar to previously described embodiments, one of the interconnects may comprise the first ring structure and the other may comprise the second ring structure.

It is to be understood that the bidirectional ring interconnect is not limited to one or two ring structures, but may include any number of ring structures to transport packets in multiple directions.

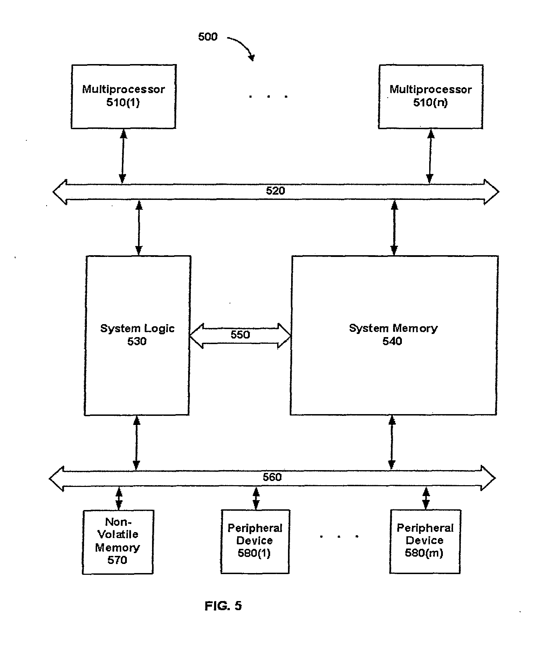

FIG. 5 is a block diagram of a computer system, which may include an architectural state, including one or more multiprocessors and memory for use in accordance with an embodiment of the present invention. In FIG. 5, a computer system 500 may include one or more multiprocessors 510(1)-510(n) coupled to a processor bus 520, which may be coupled to a system logic 530. Each of the one or more multiprocessors 510(1)-510(n) may be N-bit processors and may include a decoder (not shown) and one or more N-bit registers (not shown). In accordance with an embodiment of the present invention, each of the one or more multiprocessors 510(1)-510(n) may include a bidirectional ring interconnect (not shown) to couple to the N-bit processors, the decoder, and the one or more N-bit registers.

System logic 530 may be coupled to a system memory 540 through a bus 550 and coupled to a non-volatile memory 570 and one or more peripheral devices 580(1)-580(m) through a peripheral bus 560. Peripheral bus 560 may represent, for example, one or more Peripheral Component Interconnect (PCI) buses, PCI Special Interest Group (SIG) PCI Local Bus Specification, Revision 2.2, published December 18, 1998; industry standard architecture (ISA) buses; Extended ISA (EISA) buses, BCPR Services Inc. EISA Specification, Version 3.12, 1992, published 1992; universal serial bus (USB), USB Specification, Version 1.1, published September 23, 1998; and comparable peripheral buses. Non-volatile memory 570 may be a static memory device such as a read only memory (ROM) or a flash memory. Peripheral devices 580(1)-580(m) may include, for example, a keyboard; a mouse or other pointing devices; mass storage devices such as hard disk drives, compact disc (CD) drives, optical disks, and digital video disc (DVD) drives; displays and the like.

Embodiments of the present invention may be implemented using any type of computer, such as a general-purpose microprocessor, programmed according to the teachings of the embodiments. The embodiments of the present invention thus also includes a machine readable medium, which may include instructions used to program a processor to perform a method according to the embodiments of the present invention. This medium may include, but is not limited to, any type of disk including floppy disk, optical disk, and CD-ROMs.

It may be understood that the structure of the software used to implement the embodiments of the invention may take any desired form, such as a single or multiple programs. It may be further understood that the method of an embodiment of the present invention may be implemented by software, hardware, or a combination thereof.

The above is a detailed discussion of the preferred embodiments of the invention. The full scope of the invention to which applicants are entitled is defined by the claims hereinafter. It is intended that the scope of the claims may cover other embodiments than those described above and their equivalents.

## Claims

1. An apparatus comprising at least one bidirectional ring structure on a semiconductor chip.

2. The apparatus of claim 1, further comprising a plurality of nodes coupled together by the at least one bidirectional ring structure.

3. The apparatus of claim 2, wherein each node comprises one of a processor, a cache bank, a shared memory interface, a shared global coherence engine interface, and a shared input/output interface.

4. The apparatus of claim 2, further comprising a subtractor to couple to at least one of the plurality of nodes and to compute a direction on the at least one bidirectional ring structure to transport packets between the at least one of the plurality of nodes and a destination node.

5. The apparatus of claim 2, further comprising a programmable finite state machine to couple to at least one of the plurality of nodes and to compute a direction on the at least one bidirectional ring structure to transport packets between the at least one of the plurality of nodes and a destination node.

6. The apparatus of claim 1, wherein the at least one bidirectional ring structure is to transport packets concurrently in a clockwise direction and in a counterclockwise direction.

7. The apparatus of claim 1, wherein the at least one bidirectional ring structure is to transport packets alternatively in a clockwise direction and in a counterclockwise direction.

8. A semiconductor chip comprising:
a plurality of processors;
an address space shared between the plurality of processors; and
a bidirectional ring structure to couple to the plurality of processors and the address space.

9. The semiconductor chip of claim 8, wherein each of the plurality of processors comprises a central processing unit.

10. The semiconductor chip of claim 8, wherein the address space comprises a plurality of cache banks.

11. The semiconductor chip of claim 10, wherein the plurality of cache banks is to form a distributed shared cache.

12. The semiconductor chip of claim 11, wherein each of the plurality of cache banks of the distributed shared cache is responsible for a subset of the address space.

13. The semiconductor chip of claim 8, wherein the bidirectional ring structure is to transport packets between the plurality of processors and the address space.

14. The semiconductor chip of claim 13, wherein a packet is to transport an address request.

15. The semiconductor chip of claim 13, wherein a packet is to transport data.

16. The semiconductor chip of claim 13, wherein a packet is to transport a cache coherence protocol message.

17. The semiconductor chip of claim 16, wherein the cache coherence protocol message is to convey an invalidation of a cached address in the address space.

18. The semiconductor chip of claim 16, wherein the cache coherence protocol message is to convey permission to modify an address line in the address space.

19. The semiconductor chip of claim 16, wherein the cache coherence protocol message is to convey a request to extract modified data of an address line in the address space.

20. The semiconductor chip of claim 8, wherein the bidirectional ring structure comprises at least a first wire to transmit packets in a clockwise direction and at least a second wire to transmit packets in a counterclockwise direction.

21. The semiconductor chip of claim 20, wherein the bidirectional ring structure comprises a plurality of first wires to transmit packets in the clockwise direction and a plurality of second wires to transmit packets in the counterclockwise direction.

22. The semiconductor chip of claim 8, further comprising a subtractor to couple to at least one of the plurality of processors and to compute a direction on the bidirectional ring structure to transport a packet between the at least one of the plurality of processors and the address space and between the at least one of the plurality of the processors and a second one of the plurality of processors.

23. The semiconductor chip of claim 8, further comprising a subtractor to couple to a first portion of the address space and to compute a direction on the bidirectional ring structure to transport a packet between the first portion of the address space and at least one of the plurality of processors and between the first portion of the address space and a second portion of the address space.

24. The semiconductor chip of claim 8, further comprising a programmable finite state machine to couple to at least one of the plurality of processors and to compute a direction on the bidirectional ring structure to transport a packet between the at least one of the plurality of processors and the address space and between the at least one of the plurality of the processors and a second one of the plurality of processors.

25. The semiconductor chip of claim 24, wherein the programmable finite state machine is to search a look-up table for the direction based on a distance between the at least one of the plurality of processors and the address space or between the at least one of the plurality of processors and the second one of the plurality of processors.

26. The semiconductor chip of claim 8, further comprising a programmable finite state machine to couple to a first portion of the address space and to compute a direction on the bidirectional ring structure to transport a packet between the first portion of the address space and at least one of the plurality of processors and between the first portion of the address space and a second portion of the address space.

27. The semiconductor chip of claim 26, wherein the programmable finite state machine is to search a look-up table for the direction based on a distance between the first portion of the address space and the at least one of the plurality of processors and between the first portion of the address space and the second portion of the address space.

28. The semiconductor chip of claim 8, wherein each of the plurality of processors is to compute a direction on the ring structure to transport a packet between the processor and another processor or between the processor and the address space.

29. A system comprising:
a multiprocessor chip comprising
at least one central processing unit,
a shared address space, and
at least one bidirectional ring structure to couple the at least one central processor unit and agents of the shared address space; and
a bus to transport packets from the multiprocessor chip.

30. The system of claim 29, further comprising a memory coupled to the bus.

31. The system of claim 30, wherein the multiprocessor chip further comprises a shared memory interface coupled to the at least one bidirectional ring structure, the shared memory interface to couple the multiprocessor chip to the memory.

32. The system of claim 29, wherein the multiprocessor chip further comprises a shared global coherence engine interface coupled to the at least one bidirectional ring structure, the shared global coherence engine interface to couple the multiprocessor chip to a plurality of other multiprocessor chips.

33. The system of claim 29, further comprising at least one input/output device coupled to the bus.

34. The system of claim 33, wherein the multiprocessor chip further comprises a shared input/output interface coupled to the at least one bidirectional ring structure, the shared input/output interface to couple the multiprocessor chip to the at least one input/output device.

35. A method comprising:
calculating distances on first and second ring structures on a chip between a source node and a destination node;
determining on which of the first and second ring structures to transport a packet between the source and destination nodes based on the calculated distances; and
transporting the packet from the source node to the destination node on the determined ring structure.

36. The method of claim 35, wherein the calculating comprises:
calculating a clockwise distance between the source and destination nodes on the first ring structure; and
calculating a counterclockwise distance between the source and destination nodes on the second ring structure.

37. The method of claim 35, wherein the determining comprises:
determining which of the first and second ring structures has a shortest distance between the source and destination nodes in separate directions on each of the first and second ring structures.

38. The method of claim 37, wherein the separate directions comprise a clockwise direction and a counterclockwise direction.

39. The method of claim 35, wherein the determining comprises:
determining which of the first and second ring structures has less traffic.

40. The method of claim 35, wherein the transporting comprises:
transporting the packet clockwise on the first ring structure or counterclockwise on the second ring structure.

41. The method of claim 35, wherein the transporting comprises:
waiting to transport the packet from the source node, if another packet on the determined ring structure arrives at the source node.

42. The method of claim 35, wherein the transporting comprises:
advancing the packet on the determined ring structure every clock cycle.

43. A computer program code means adapted to perform all these steps of any of claims 35 - 42 when the program is run on a computer.

44. A computer program as claimed in claim 43 when embodied on a computer readable medium.
